# EUROPEAN PATENT APPLICATION

(11) **EP 1 248 400 A1**
(43) Date of publication of application: **09.10.2002**
(21) Application number: 01303143.0
(22) Date of filing: 02.04.2001
(51) Int. Cl.: H04J 3/16, H04J 3/08

(54) **Data transport service using a telephone network**

(71) Applicant: LUCENT TECHNOLOGIES INC., Murray Hill, New Jersey 07974-0636 (US)
(72) Inventor: Grimbergen, Steef P., 3831 MN Leusden (NL); Slegter, Tom, 3555 VE Utrecht (NL)
(74) Representative: Sarup, David Alexander

(57) **Abstract**

An interface to a telephone network is provided to transport a datastream with a pre-specified maximum bit rate R is transported over a telephone network. N1 containers are needed at least per frame period of the network to transport the R bit data stream. The interface uses a concatenation group with N1 members, each for transporting a stream of a container per frame period over the telephone network. When the interface is activated to support the data stream, the interface establishes N simultaneously active connections through the network, N exceeding the number of connections N1 needed at least to transport the data stream.The interface allocates N1 of the N connections to the concatenation group, one or more remaining unallocated connections through the telephone network are kept open but remain unused. The interface monitors whether a connection from the N1 allocated connections fails and, if so, allocates at least one of the remaining connections for transporting the data for the member to which the failing connection was allocated.

## Description

The invention relates to transport of a data stream over a telephone network.

Telephone networks have been designed to establish point-to-point connections (or, equivalently, transport paths) between pairs of selectable outlets, typically for transporting speech data. By definition, a connection is a channel for transporting data between the selected outlets. Once a connection has been established the network provides for a fixed rate of data transport between the outlets. Typically, a connection provides for the transport of a so-called container of data in every cycle of transfer (called a frame) which typically lasts 125 microseconds. In transport according to the SONET protocol for example, one container (called STS1) provides for the transport of 774 bytes in a frame of 125 microseconds. In transport according to the SDH protocol, one container (called VC4) provides for the transport of 2340 bytes of data in a frame of 125 microseconds.

ITU-T standards documents G707 and G783 describe how the telephone network supports transport of data with higher data rates than one container per frame. This is realized by the use of so-called concatenation groups. A concatenation group provides for transport of a number of containers in parallel via different connections. The data-stream is distributed over containers of the concatenation group, transported and reassembled after transport over the telephone network. In the ITU standards, the concatenation group consists of a fixed number of containers, which remains the same during an entire session.

As a further development, a Link Capacity Adjustment Scheme (LCAS) has been developed, in which the number of containers in a concatenation group can change during a session. LCAS is described in document T1X1.5/2000-199 R1, a contribution to T1 Standards Project T1X1.5. LCAS is implemented in an interface unit between the source of the data stream and the telephone network and an interface unit between the telephone network and the sink of the data stream. Externally, The interface units appear as a connection that is able to transport a high bandwidth data stream.

Given the required bandwidth of the data stream the number of members of the concatenation group is determined. The LCAS interface unit manages the establishment of connections for these channels. For each of the members a connection is established over the telephone network. For example, if the user wants to transport a 1 Gigabit per second data stream, the use would specify 7 connections for VC4 containers or 21 connections for STS containers.

In the LCAS interface the number of members of the concatenation group may fall during a session, for example when a connection fails. In case of failure, the member that uses the failing connection is removed from the group. This is controlled autonomously by the interface unit, without user interaction. Failure of a member channel will normally result in a reduction of the data-rate supported by the concatenation group, because the interface unit will have to transport the data with less containers.

### Summary of the Invention

It is an object of the invention to provide for a service for transport of data over a telephone network in which an interface unit between the network and a user provides for more robustness against failure of connections.

The invention provides for <see claim 1 below>. Thus, a service for providing robustness against failure of channels is provided by the interface unit between the user and the network. Transparent to the user and the telephone network, the interface unit causes the telephone network to establish more connections than normally used as channels for data transmission via the interface unit. The interface unit transmits empty (or irrelevant) containers over the excess connections, but when the interface unit detects that the connection for one of the members of a concatenation group fails, the interface unit inserts the data for that member into one of the excess connections which has already been established and is therefore immediately available.

Preferably, the interface unit has a software or hardware switch for selecting the service level provided for a concatenation group. When the interface unit detects that the switch is set to normal, "low cost" service level selection, the interface unit establishes just as many connections as are sufficient for transporting the maximum bandwidth that the interface unit is specified to transport. When the interface unit detects that the switch is set to a "robust" service level selection, the interface unit establishes a number of connections in excess to the number of connections that is sufficient for transporting the maximum bandwidth that the interface unit is specified to transport.

In an embodiment, the interface unit provides for transport of two one Gigabit per second data streams. It has been discovered that robustness can be provided very efficiently for two 1 Gigabit per second channels using an OC48 signal that is conventionally available in the case of a telephone network that operates according to the SONET protocol. Per frame 2 containers of the OC48 signal are allocated to each one Gigabit per second data stream. This leaves 6 containers per frame as spares for failing connections.

Similarly, it has been discovered that robustness can be provided very efficiently for two 1 Gigabit per second channels using an STM16 signal that is conventionally available in a telephone network that operates according to the SDH protocol. Per frame 7 containers of the STM 16 signal are allocated to each one Gigabit per second signal. This leaves 2 containers per frame as spares for failing connections.

Similarly, one can use spare channels that become available when one uses STM64 or OC192 (64 containers in parallel for SDH and 192 containers in parallel for Sonet) to realize 10 Gbit per second channels or STM256/OC768 (256 containers in parallel for SDH and 768 containers in parallel for Sonet) to realize 40 Gbit per second channels.

Preferably, the interface unit establishes connections over different paths through the network. Thus, if one path fails, only part of the connections for the data stream will be affected.

Preferably, the connections are evenly distributed over the different paths. Thus the maximum loss of connections due to failure of any single path is minimized.

### Brief description of the drawing

These and other advantageous aspects of the system, interface unit and method according to the invention will be described in more detail using the following figures.
- Figure 1: shows a system for transporting data including a data stream
- Figure 2: shows a receiving part of an interface unit
- Figure 3: shows a transmitting part of an interface unit
- Figure 4: shows a distribution of connections over different routes

### Detailed description of the embodiments

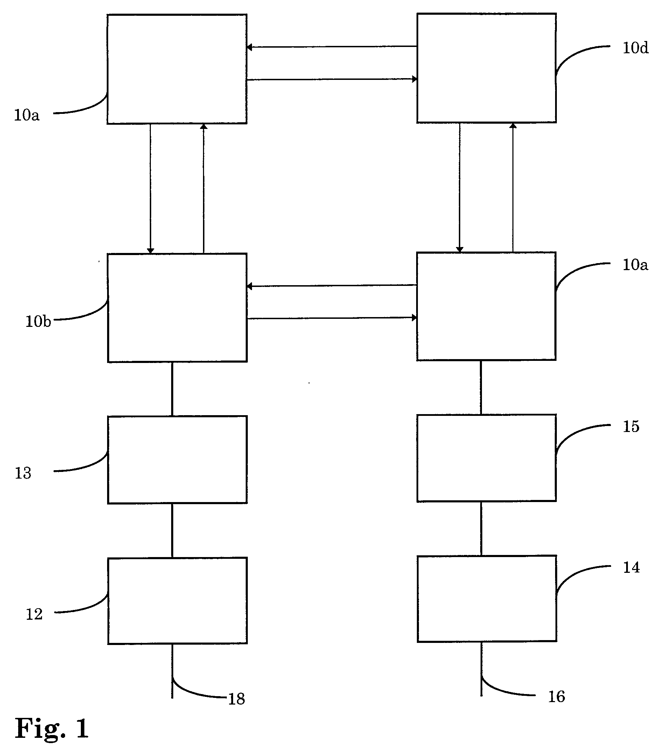

Figure 1 shows a telephone network system with an input 16 and output 18 for a data stream. The system will be discussed for transport of a maximally 1 Gigabit per second data-stream from data-stream input 16 to data stream output 18 via a SDH or SONET network.

For the purpose of illustration the system shown to contain four port units 10a-d connected in a ring topology, in which containers of bytes can be passed from one port unit 10a-d in clockwise and counter-clockwise direction. By way of example two of the port units 10a,b are shown to be connected to interface units 12, 14, via cross connect units 13, 15, but other interface units and cross connect units (not shown) may be connected to other port units 10c,d and/or the same port units 10a,b.

The interface units 12, 14 contain a controlling computer (not shown) for instructing the network nodes to establish connections. Furthermore the interface units contain at least one of a receiving and a transmitting part.

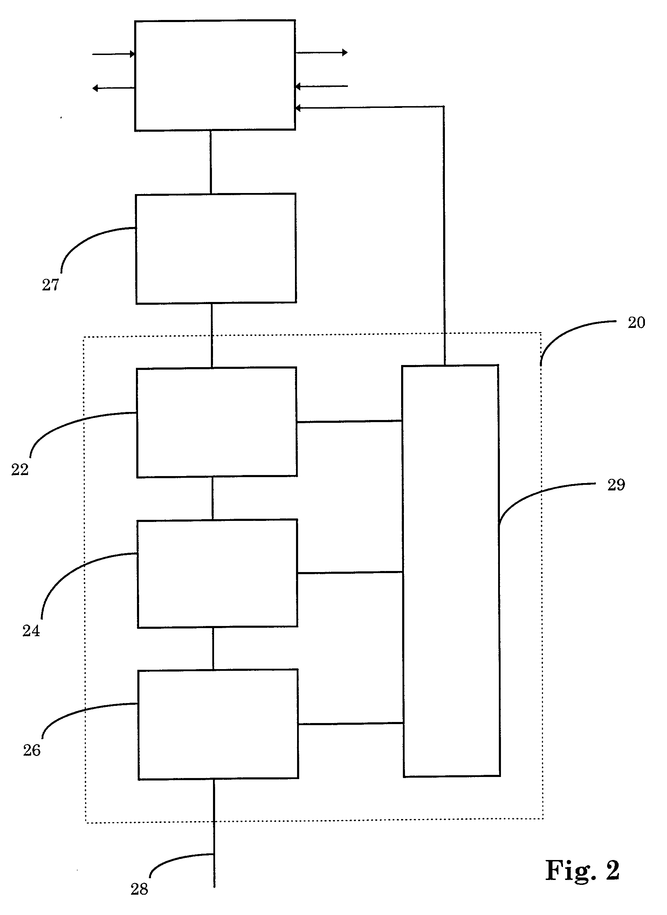

Figure 2 shows a receiving part of an interface unit 20 in more detail. The interface unit 20 contains a path termination sink 22, a concatenation sink 24, and a decapsulation unit 26, connecting, in series, a cross-connect unit 27 and a data-stream output 28. The path termination sink 22, concatenation sink 24, and decapsulation unit 26 are controlled by controlling computer 29, which is also coupled to the network. Preferably each interface unit 12, 14 contains two such receiving parts 20, each for connecting to a data source, such as an Ethernet link (not shown) over which at maximum 1 Gigabit per second can be transported.

The various units shown in figure 2 may be realized as dedicated circuits, or as software modules executed by a programmable processor (not shown), or as combinations of circuits and software modules.

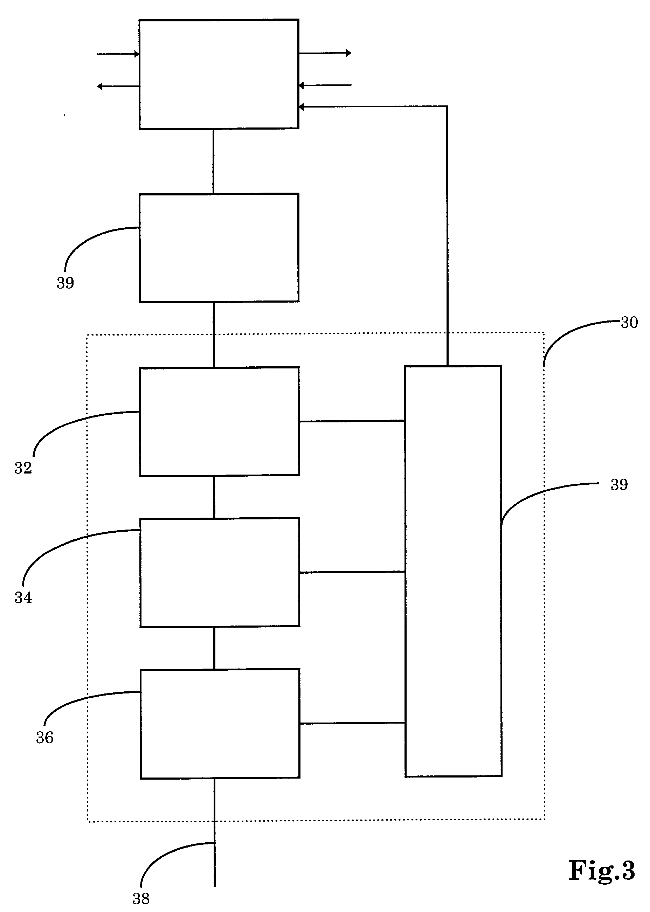

Figure 3 shows a transmitting part of an interface unit 30 in more detail. The interface unit 30 contains a path termination source 32, a concatenation source 34, and an encapsulation unit 36. The path termination source 32, concatenation source 34, and encapsulation unit 36 are controlled by a controlling computer 39, which is also coupled to the network. A data-stream input 38 (coupled, for example, to an Ethernet link) is connected to a cross-connect unit 37 via, in series, encapsulation unit 36, concatenation source 34 and path termination source 32. Preferably each interface unit 12, 14 contains two such transmitting parts 30, each for transmitting a 1 Gigabit per second data stream.

The various units shown in figure 3 may be realized as dedicated circuits, or as software modules executed by a programmable processor (not shown), or as combinations of circuits and software modules.

In operation encapsulation unit 36 receives data from the input 18, splits the data into blocks, each for a frame period of for example 125 microseconds and, if necessary, pads the blocks with idle data if the data received from input 18 does not have the maximum bit rate.

Path termination source and sink 32, 22 interface to a number of connections through the network 10a-d, each for transmitting a container of data in each frame period of the network 10a-d.

Concatenation source 34 maintains a so-called concatenation group with member streams of containers of data. Connections are allocated to respective ones of the members of the concatenation group. Concatenation source 34 distributes the data received from encapsulation unit 36 in each frame period over containers for respective ones of the members of the concatenation group. Concatenation source supplies the containers for the members to the path termination source 32 which transmits the containers for each member via the connection that is allocated to the member.

The path termination sink 22, concatenation sink 24 and decapsulation unit 26 perform the reverse actions of the path termination source 32, the concatenation source 34 and the encapsulation unit 36 respectively. Path termination sink 22 receives the containers from the various connections and supplies them to concatenation sink 24. Concatenation sink reconstructs the blocks of data from the containers. Decapsulation unit 26 retrieves the data from the blocks, removing idle data and transmits the data to output 26.

The number of members of the concatenation group maintained by concatenation source 34 is adjustable. Concatenation sink unit 24 detects whether transmission of any one of the connections through the network has failed, for example because no container has arrived through a connection. If so, concatenation sink unit 24 signals back failure to the concatenation source unit 34. In response concatenation source 34 is able to remove the member to which the failing connection is allocated from the group. This reduces the size of the blocks from encapsulation unit 36 that can be transmitted. If encapsulation unit 36 receives data at a higher rate than can be transmitted per frame period it will signal to its input 38 to reduce the amount of data. If the input 38 is coupled to an Ethernet link for example, encapsulation unit 36 may cause collisions on the Ethernet link to reduce the effective data rate.

Similarly, when a connection becomes operable again, concatenation sink unit 24 signals back the end of the failure to the concatenation source unit 34, which then increases the number of members in the concatenation group, so that larger blocks of data can be transmitted per frame.

When the transmitting part of the interface unit 30 becomes active, the controlling computer 39 of the interface unit causes the network 10a-d to establish a predetermined number N of connections for transporting N containers per frame period. The telephone network 10a-d sets up a respective path through the telephone network for each connection to transport its containers via its own path. In transport according to the SONET protocol for example, each connection provides for transport of one container (called STS1) containing M=774 bytes of data in a frame of 125 microseconds. In transport according to the SDH protocol, each connection provides for transport of one container (called VC4) containing M=2340 bytes of data in a frame of 125 microseconds.

According to the invention, the controlling computer 39 establishes a greater number N of connections than a number N1 that sufficient for the transmitting the maximum possible bandwidth of the data stream. N1 of these connections are for allocation for active use by members of the concatenation group and N-N1 are for allocation to spare members.

Normally, when none of the connections established by the controlling computer 39 has failed, the N-N1 connections remain established, but do not transport any relevant data. But when the connection allocated to a member of the concatenation group fails, this member is removed from the concatenation group and a spare member, to which one of the N-N1 connections is allocated is added to the group. Because such a connection has already been established before the failure occurs, the replacement is almost instantaneous and much less capacity is lost than if, say, a spare connection had to be established after the failure of a connection. Thus the number of members in the group remains at N1, at least until more than N-N1 connections have failed.

In an embodiment, the number of spare connections is adjustable. A (software or hardware) switch is used to indicate the number S of spare connections. When the interface unit 30 is activated the that the controlling computer 39 will set up the number N1+S of connections indicated by this switch.

In another embodiment, the maximum number N1 of connections that the concatenation source 34 will include in the concatenation group is externally controllable. A traffic monitor (not shown), for example, connected to an Ethernet link connected to the input 38 monitors the traffic to the Ethernet encapsulation unit 38. If traffic monitor detects that the average amount of traffic per unit time differs from the established data rate for an extended period of time of, say, 1 to 10 minutes, the traffic monitor signals the controlling computer 39 to change N1 so as to provide sufficient connections for the average bandwidth. In response controlling computer 39 changes the number of established channels to N1+S, keeping S connections for spare members to handle failing channels.

Because the establishment of connections and the assignment of connections to containers is controlled by the interface unit 12, 14, a robustness is realized against network failures that is transparent to both the network nodes 10a-d and the input/outputs for the data-stream. To the nodes, it appears as though N channels, each for transporting one container per frame, are operational with a normal service level. At the input/outputs for the data-stream, it appears as though there is a fixed data rate channel between the input and output, irrespective of failures of connections through the telephone network.

Preferably, the connections for the interface unit 12, 14 are set-up via mutually different paths through the network, for example clock-wise paths and counter clock-wise paths through a ring topology. Thus, there will be respective sets of connections for different paths, each connection in a respective set following a same path, or at least partly a same path, as the other connections in the set. In this case, the connections for a data-stream are preferably selected as much as possible evenly from different ones of these sets of connections. As a result, when a path fails, the maximum number of failing connections is minimal.

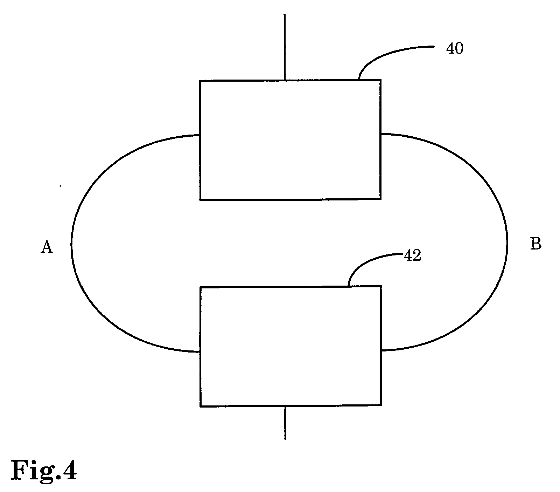

Figure 4 shows a distribution of routes A, B between a transmitting interface unit 40 and a receiving interface unit 42. In the case of a network operating under the SONET protocol, a connection for an OC48 signal is established, which provides for 48 connections for transporting containers. These 48 connections are used for two 1 Gigabit data streams which would each have sufficient bandwidth using 21 connections. Both routes A,B provide for twelve connections. Eleven of the twelve connections along a first one A of the routes are allocated for transporting containers with data from the stream, one spare connection is left along this route A. Ten of the twelve connections along a second one B of the routes are allocated for transporting containers with data from the stream, two spare connections are left along this route B. When one of the routes A,B fails completely, the spare connections along the other route A,B are allocated for transporting data for the stream, together with the connections along that other route that were already allocated. Thus, by means of the spare connections, the loss of data transport capacity is reduced, and by evenly distributing the allocated connections from the two routes A,B (ten and eleven respectively) a minimum of disruption occurs.

## Claims

1. A method of providing a transport service of a data-stream with a pre-specified maximum bit rate R over a telephone network, the method comprising
- creating a concatenation group with N1 members, each for transporting a stream of a container per frame period over the telephone network, N1 being the number of containers needed at least per frame period to transport the R bit data stream;
- transporting the data stream, using the concatenation group, over connections over the telephone network that are allocated to the members;
the method comprising
- when the transport service is activated, establishing N simultaneously active connections through the network, N exceeding the number of connections N1 needed at least to transport the data stream;
- allocating N1 of the N connections to the concatenation group, one or more remaining unallocated connections through the telephone network being kept open;
- monitoring whether a connection from the N allocated connections fails and, if so, allocating at least one of the remaining connections for transporting the data for the member to which the failing connection was allocated.

2. A method according to Claim 1, wherein the network makes use of the SONET protocol, the method providing for transport of two instances of the data-stream, with a data rate of 1 Gigabit per se
cond, said establishing comprising setting-up connections for an OC48 signal of N=48 connections, from which connections N1=21 connections are assigned for transport of each data-stream.

3. A method according to Claim 1, wherein the network makes use of the SDH protocol, the method providing for transport of two instances of the data-stream, with a data rate of 1 Gigabit per second, said establishing comprising setting-up connections for an STM16 signal of N=16 connections, from which connections N1=7 connections are assigned for transport of each data-stream.

4. An method to Claim 1, the connections being organized in sets, each for a respective route along nodes in the network, all connections in each respective set running through the route for that respective set, the connections allocated to each data-stream being as much as possible evenly distributed over the different sets.

5. An interface unit for use between a telephone network node and a data-stream input or output, the interface unit being arranged
- to implement a link capacity adjustment scheme providing for transport of data using a concatenation group having a first integer number N1 of active members, each for transporting a container of data per a transport frame over the telephone network;
- in response activation of the interface unit to transport a data stream, to set-up a second integer N number of connections, each connection providing a transport path through a telephone network, each connection capable of transporting one container along its transmission path per transport frame, the second number N being greater than the first number N1;
- to allocate N1 of the N connections, each to a respective one of the N1 active members for transporting data for the respective one of the members;
- to detect whether a transmission path allocated to a particular one of the members has failed and, if so, to substitute one of the N connections not yet allocated to one of the N1 members for transporting data for the particular one of the members.

6. An interface unit according to Claim 5 having a switch for selecting a service level, the interface unit being arranged
- to establish N1 connections, just as many as are sufficient for transporting the maximum bandwidth that the interface unit is specified to transport, when the interface unit detects that the switch is set to a first service level selection;
- to establish N connections, exceeding the number N1 of connections sufficient for transporting the maximum bandwidth that the interface unit is specified to transport, when the interface unit detects that the switch is set to a second service level selection

7. An interface unit according to Claim 5 or 6, wherein the network makes use of the SONET protocol, the interface unit providing for transport of two instances of said concatenation group, each of N1=21 members, each instance for transport of a 1 Gigabit per second data stream, the interface unit being arranged to set-up connections for an OC48 signal of N=48 connections, from which connections are allocated to both instances of the concatenation groups.

8. An interface unit according to Claim 5 or 6, wherein the network makes use of the SDH protocol, the interface unit providing for transport of two instances of said concatenation group, each of N1=7 members, each instance for transport of a 1 Gigabit per second data stream, the interface unit being arranged to allocate an STM16 signal of N=16 connections, from which connections are allocated to both instances of the concatenation groups.

9. An interface unit according to Claim 5, 6, 7 or 8 arranged to organize the connections in sets, each for a respective route along nodes in the network, all connections in each respective set running through the route for that respective set, the interface unit being arranged as much as possible to evenly distribute the connections allocated to members of the group over the different sets.

10. A telephone exchange comprising an interface unit arranged between a telephone network node and a data-stream input or output, the interface unit being arranged
- to implement a link capacity adjustment scheme providing for transport of data using a concatenation group having a first integer number N1 of active members, each for transporting a container of data per a transport frame over the telephone network;
- in response activation of the interface unit to transport a data stream, to set-up a second integer N number of connections, each connection providing a transport path through a telephone network, each connection capable of transporting one container along its transmission path per transport frame, the second number N being greater than the first number N1;
- to allocate N of the N connections, each to a respective one of the N1 active members for transporting data for the respective one of the members;
- to detect whether a transmission path allocated to a particular one of the members has failed and, if so, to substitute one of the N connections not yet allocated to one of the N1 members for transporting data for the particular one of the members.

11. A telephone exchange according to Claim 10 having a switch for selecting a service level, the interface unit being arranged
- to establish N1 connections, just as many as are sufficient for transporting the maximum bandwidth that the interface unit is specified to transport, when the interface unit detects that the switch is set to a first service level selection;
- to establish N connections, exceeding the number N1 of connections sufficient for transporting the maximum bandwidth that the interface unit is specified to transport, when the interface unit detects that the switch is set to a second service level selection

12. A telephone exchange according to Claim 10 or 11, wherein the exchange makes use of the SONET protocol, the interface unit providing for transport of two instances of said concatenation group, each of N1=21 members, each instance for transport of a 1 Gigabit per second data stream, the interface unit being arranged to set-up connections for an OC48 signal of N=48 connections, from which connections are allocated to both instances of the concatenation groups.

13. A telephone exchange according to Claim 10 or 11, wherein the exchange makes use of the SDH protocol, the interface unit providing for transport of two instances of said concatenation group, each of N1=7 members, each instance for transport of a 1 Gigabit per second data stream, the interface unit being arranged to allocate an STM16 signal of N=16 connections, from which connections are allocated to both instances of the concatenation groups.

14. A telephone exchange according to Claim 10, 11, 12 or 13, arranged to organize the connections in sets, each for a respective route along nodes in the network, all connections in each respective set running through the route for that respective set, the interface unit being arranged as much as possible to evenly distribute the connections allocated to members of the group over the different sets.
